Europäisches Patentamt

European Patent Office

Office européen des brevets

(19)

(11) Numéro de publication : **0 200 649 B2**

(12) # NOUVEAU FASCICULE DE BREVET EUROPEEN

(45) Date de publication du nouveau fascicule du brevet : **16.10.91 Bulletin 91/42**

(51) Int. Cl.$^5$ : **B60J 5/10**

(21) Numéro de dépôt : **86400927.9**

(22) Date de dépôt : **28.04.86**

(54) **Porte vitrée de véhicule, à châssis pivotant.**

(30) Priorité : **30.04.85 FR 8506600**

(43) Date de publication de la demande :
**10.12.86 Bulletin 86/45**

(45) Mention de la délivrance du brevet :
**13.07.88 Bulletin 88/28**

(45) Mention de la décision concernant
l'opposition :
**16.10.91 Bulletin 91/42**

(84) Etats contractants désignés :
**AT BE CH DE GB IT LI LU NL SE**

(56) Documents cités :
**EP-A- 0 196 968**

(56) Documents cités :
**DE-A- 2 615 522**
**FR-A- 1 241 868**
**US-A- 3 612 601**
**US-A- 3 713 472**
**US-A- 4 413 854**
**"AMC Gremlin", Automobil Revue, 26.02.70,
S. 33**

(73) Titulaire : **FRANCE DESIGN Henri Heuliez S.A.
"La Boujalière", Le Pin
F-79140 Cerizay (FR)**

(72) Inventeur : **Queveau, Gérard
"Amik-Farm" Les Boulaies Le Pin
F-79140 Cerizay (FR)**

(74) Mandataire : **Rodhain, Claude
Cabinet Claude Rodhain 30, rue la Boétie
F-75008 Paris (FR)**

EP 0 200 649 B2

## Description pour les Etats contractants suivants : DE, GB, IT

## Description

L'invention concerne les véhicules, notamment les véhicules automobiles, et plus précisément une porte de véhicule comportant un châssis de porte pivotant par rapport à l'habitacle et une vitre, adaptée à autoriser un mouvement relatif pivotant entre la vitre et le châssis (voir US-A-4413854).

A l'heure actuelle, les véhicules automobiles du type "à deux corps" connaissent une faveur croissante de la part du public. Ces véhicules, comportant une porte arrière connue sous le nom de hayon, articulée autour d'un axe horizontal en haut de la partie arrière du véhicule, ont en effet pour avantage d'allouer, si nécessaire, un important volume de chargement simplement en enlevant ou en repliant la tablette arrière. Couramment, les véhicules de ce type sont également munis d'une banquette arrière repliable derrière la banquette avant, ou même entièrement amovible, ce qui augmente encore le volume disponible.

Ces véhicules ont malheureusement un inconvénient important : l'accès au coffre impliquant le pivotement de la totalité du hayon, provoque la mise en contact de l'habitacle avec l'air extérieur ; lorsque la température est très froide ou au contraire très chaude, les occupants de l'habitacle subissent donc de brusques et désagréables variations de température et sont également soumis éventuellement au vent et autres intempéries, ce qui n'est pas le cas des occupants des véhicules classiques connus sous le nom de "trois corps".

L'invention a pour but de remédier à cet inconvénient et concerne à cet effet une porte de véhicule, comportant un châssis pivotant par rapport à l'habitacle et une vitre fixée à l'intérieur d'un cadre monté lui-même pivotant par rapport à l'habitacle, les axes géométriques de pivotement du châssis de la porte d'une part, et du cadre et de la vitre d'autre part, étant à la partie supérieure de l'habitacle et confondus, porte caractérisée en ce qu'elle comporte au moins un verrou actionnable dans une position de solidarisation du cadre avec sa vitre par rapport au châssis de porte et de désolidarisation du cadre avec sa vitre par rapport à l'habitacle dans laquelle le cadre avec sa vitre et le châssis de porte sont pivotables solidairement, et dans une position de désolidarisation du cadre avec sa vitre par rapport au châssis de porte et de solidarisation du cadre avec sa vitre par rapport à l'habitacle dans laquelle le châssis de porte est pivotable seul, une commande de position de verrou(s) commune à tous les verrous pour sélectionner la position de ceux-ci, et une unique serrure de porte, de telle sorte qu'en fonction de la position sélectionnée par la

commande de verrous, la manoeuvre de la serrure permet sélectivement le relevage du châssis de porte et de la vitre avec son cadre, et le relevage du châssis de porte sans la vitre et son cadre lesquels sont alors solidarisés à l'habitacle.

Grâce à cette conception, il est offert à l'utilisateur une possibilité de mouvement relatif pivotant entre la vitre et le châssis permettant un accès au coffre par pivotement du châssis de porte seul, la vitre restant en place entre le toit du véhicule et la tablette arrière de manière à maintenir l'habitacle pratiquement clos.

L'invention sera mieux comprise grâce à la description qui va suivre se rapportant à des formes de réalisation préférentielles données à titre d'exemples non limitatifs et aux dessins ci-joints dans lesquels :

les figures 1 et 2 montrent schématiquement un véhicule vu du profil muni respectivement d'une porte selon l'invention en position ouverte et de la même porte dont seul le châssis est dans cette position ouverte ;
la figure 3 montre schématiquement en perspective l'arrière d'un véhicule muni de cette même porte ;
la figure 4 est une section schématique selon la ligne IV-IV de la figure 3 montrant le montagne de la porte dans la région des articulations ;
la figure 5 est une section schématique selon la ligne V-V de la figure 3 montrant le détail de la porte dans la région des verrous ;
la figure 5A est une vue des organes du verrou suivant la flèche $F_1$ de la figure 5, la porte proprement dite n'étant pas représentée ;
la figure 5B est une vue suivant la flèche $F_2$ de la figure 5 ;
la figure 6 est une vue schématique arrière d'une porte selon l'invention ;
la figure 6A est une section partielle selon la ligne VIA-VIA de la figure 6 ;
la figure 7 est une section schématique d'une variante de réalisation du montage de la porte dans la région des articulations ;
la figure 8 est une section schématique de la même variante de réalisation de la porte dans la région d'un verrou, celui-ci n'étant pas représenté.

De manière générale, les dessins montrent une porte de véhicule, du type hayon arrière, comportant un châssis 1 pivotant par rapport à l'habitacle 2 et une vitre 3, adaptée à autoriser un mouvement relatif pivotant entre la vitre 3 et le châssis 1.

A cet effet, la vitre 3 est elle-même montée pivotante par rapport à l'habitacle 2, et les axes géométriques de pivotement du châssis 1 de la porte et de pivotement de la vitre 3 sont confondus ; de plus, il est prévu au moins un, et de préférence deux, verrous 4 de solidarisation et désolidarisation de la vitre 3 et du châssis 1 ainsi qu'une commande 5 de verrou, de telle sorte qu'en solidarisation le châssis de la porte et la vitre soient manoeuvrables ensemble et qu'en désolidarisation ils soient manoeuvrables séparément.

Le châssis 1 de la porte est articulé à l'habitacle 2 au moyen de deux dispositifs formant charnières constitués d'un bras pivotant 6 fixé au châssis de porte et monté à rotation autour d'un axe 7, lui-même fixé à la partie arrière supérieure du pavillon de l'habitacle.

De même, la vitre est articulée à l'habitacle au moyen d'une charnière munie d'un bras 8 pivotant autour du même axe 7 ; ce bras pivotant 8 est fixé à un cadre 9 entourant la vitre 3 et constitué d'un profilé dont la section transversale présente une succession de plusieurs trapèzes isocèles dont les bases constituant une face du cadre sont placées contre cette vitre 3, et dont les bases constituant la face opposée sont fixées au bras 8 de la charnière, par exemple par des soudures. La solidarisation du cadre 9 et de la vitre 3 est obtenue par collage, le produit de collage 10 emplissant au moins l'un des trapèzes isocèles, ouvert du côté de la vitre 3. Le profilé est disposé de telle sorte que le trapèze le plus extérieur par rapport au contour de la vitre 3 soit ouvert du côté de la vitre et légèrement en débordement par rapport à ce contour de manière à constituer une gouttière 11.

Le châssis 1 de la porte comporte une partie 12 disposée vis-à-vis de la vitre 3 au-dessous d'elle ; à cette partie 12 du châssis 1, est fixé un joint d'étanchéité 13 en contact avec la vitre 1 lorsque la porte est en position fermée et également lorsqu'elle est en position ouverte quand le châssis et la vitre sont solidarisés.

De même, une tôle de l'habitacle placée sous le châssis 1 porte un joint 14 assurant l'étanchéité entre l'habitacle et ce châssis 1 tout le long de celui-ci, sauf dans la région des bras 8 où le joint 14 est en contact avec ceux-ci au lieu de l'être avec ledit châssis. A proximité de ce joint 14, la tôle constituant l'habitacle est repliée de manière à constituer une gouttière 15.

De préférence, le châssis 1 et la glace 3 sont articulés à l'habitacle chacun au moyen de deux charnières, les axes 7 pouvant être constitués par une tige unique ou encore par des tiges distinctes disposées dans le prolongement l'une de l'autre.

Bien qu'un seul verrou de solidarisation soit nécessaire, il est préférable que ceux-ci soient au nombre de deux.

Chacun des verrous 4 comporte un pion 16 monté pivotant dans un perçage 17 d'une patte 18 soudée sous le cadre 9 de la vitre 3, de préférence mais pas obligatoirement du côté de la vitre 3 qui est opposé au côté dans la région duquel cette vitre est articulée au pavillon de l'habitacle du véhicule. Le pion 16 est immobilisé longitudinalement par rapport à la patte 18 au moyen par exemple d'une collerette 19 prévue sur ce pion d'un côté de la patte et d'une rondelle 20 fixée de l'autre côté.

Le pion 16 traverse également, sous la patte 18, une ouverture 21 usinée dans une partie fixe, par exemple une tôle 22 de la carrosserie et/ou une pièce rapportée 23 fixée sur celle-ci.

De l'autre côté de la patte 18, le pion 16 traverse également une ouverture 24 réalisée dans une tôle 25 du châssis 1 et un collier 26 fixé à cette tôle 25, ainsi qu'une ouverture 27 d'une bague 28 immobilisée en translation mais mobile en rotation dans le collier 26 fixé à la tôle 25 ; ce collier 26 est ouvert le long d'un arc ayant un angle au centre un peu supérieur à 90° de manière à permettre un libre débattement sur 90° d'un doigt 29 s'étendant dans une direction radiale par rapport à la bague 28 et faisant ici partie intégrante de celle-ci, dont le rôle sera exposé plus loin.

L'ouverture 27 de la bague 28 est de forme oblongue et reçoit une aiguille 30 s'étendant transversalement au pion 16 à l'extrémité supérieure de celui-ci et de plus grande longueur que le diamètre de cette extrémité, cette aiguille 30 pouvant être une pièce séparée goupillée dans le pion 16 ou encore faire partie intégrante de ce pion. Grâce à la coopération de l'ouverture oblongue 27 et de l'aiguille 30, le pion 16 est solidaire en rotation de la bague 28 et de son doigt 29.

L'ouverture 24 de la tôle 25 et du collier 26 est également de forme oblongue, légèrement plus grande que l'aiguille 30, et disposée juste en-dessous de cette dernière lorsque le doigt 29 occupe l'une de ses positions extrêmes.

L'ouverture 21 de la pièce rapportée 23 est elle aussi oblongue, et l'extrémité du pion 16 opposée à l'aiguille 30 comporte une aiguille 31 pouvant être également une pièce goupillée dans le pion ou faire partie intégrante de celui-ci ; les dimensions de l'aiguille 31 sont légèrement inférieures à celles de l'ouverture oblongue 21 ; l'orientation de l'aiguille 31 par rapport au grand axe de l'ouverture oblongue 21 est telle que, dans l'autre position extrême du doigt 29, l'aiguille 31 soit juste en face de l'ouverture 21, en-dessous de celle-ci ; en conséquence, dans la première position extrême, l'aiguille 31 et le grand axe de l'ouverture 21 sont sensiblement orthogonaux.

Il en résulte que dans la première position, le châssis 1 peut être dégagé du pion 16, tandis que celui-ci, immobilisé par rapport à la tôle 22, retient à celle-ci la vitre 3 ; en revanche, dans la deuxième position, le pion 16 est solidaire en translation du châssis 1 et, étant dégagé de la tôle 22, est libre d'entraîner dans son mouvement la patte 18 et la vitre 3.

Un joint 32 fixé au cadre 9 appuie, lorsque la glace 3 est en position fermée, contre la tablette arrière du véhicule, et assure l'étanchéité de l'habitacle tout le long de la glace sensiblement au niveau de la partie inférieure de celle-ci.

Comme on l'a vu, le cadre 9 de la vitre 3 est muni sur toute sa périphérie d'une gouttière 11, et l'habitacle comporte lui-même une gouttière 15. Afin de permettre l'évacuation de l'eau de la gouttière 11, celle-ci est munie à sa partie inférieure de deux orifices latéraux 33 débouchant chacun dans un conduit 34 d'un bloc 35 fixé au cadre 9 et possédant eux-mêmes une ouverture 36 débouchant dans la gouttière 15.

Ce sont les extrémités libres des doigts 29 des verrous 4 qui sont reliées à la commande de verrou 5 au moyen d'une tringlerie pouvant être rigide ou comporter des câbles souples 37.

Ainsi, deux verrouillages sont possibles pour la vitre :

— un verrouillage sur le châssis 1 permettant de relever celui-ci avec la vitre 3,

— un verrouillage sur l'habitacle 2 du véhicule permettant de relever le châssis de hayon seul.

Pour relever le châssis avec sa vitre, on commence donc par actionner la commande de verrou 5 pour choisir l'option désirée, ici avec vitre, si cette commande de verrou n'est pas dans la position appropriée. Puis, on déverrouille la porte en agissant sur la serrure générale 38 classique. L'action sur la commande de verrou 5 provoque, par l'intermédiaire de la tringlerie 37, le pivotement du doigt 29 dans la bague 28 ; le doigt 29 entraîne donc la rotation de l'ouverture oblongue 27 et en conséquence celle de l'aiguille 30 ; il en résulte que cette dernière vient se placer perpendiculairement à l'ouverture 24 et que l'aiguille 31 se place en regard de l'ouverture 21. De la sorte, le châssis 1 et la vitre 3 sont solidarisés l'un à l'autre et libérés par rapport à l'habitacle. Le fait de faire pivoter le châssis 1 autour de l'axe 7 entraîne donc également le pivotement de la glace 3 autour du même axe.

Pour relever le châssis sans la vitre, on commence donc par actionner la commande de verrou 5 pour choisir l'option désirée, ici sans vitre, si cette commande de verrou n'est pas dans la position appropriée. L'action sur la commande de verrou 5 fait pivoter le doigt 29 dans le collier 26, ce qui entraîne l'aiguille 30 en face de l'ouverture oblongue 24 du collier, et bloque l'aiguille 31 contre la pièce 23 ; il en résulte que la patte 18 est immobilisée par rapport à l'habitacle et que le châssis 1 est désolidarisé du pion 16. Le fait de faire pivoter le châssis 1 autour de l'axe 7 n'entraîne donc aucun mouvement de la vitre 3.

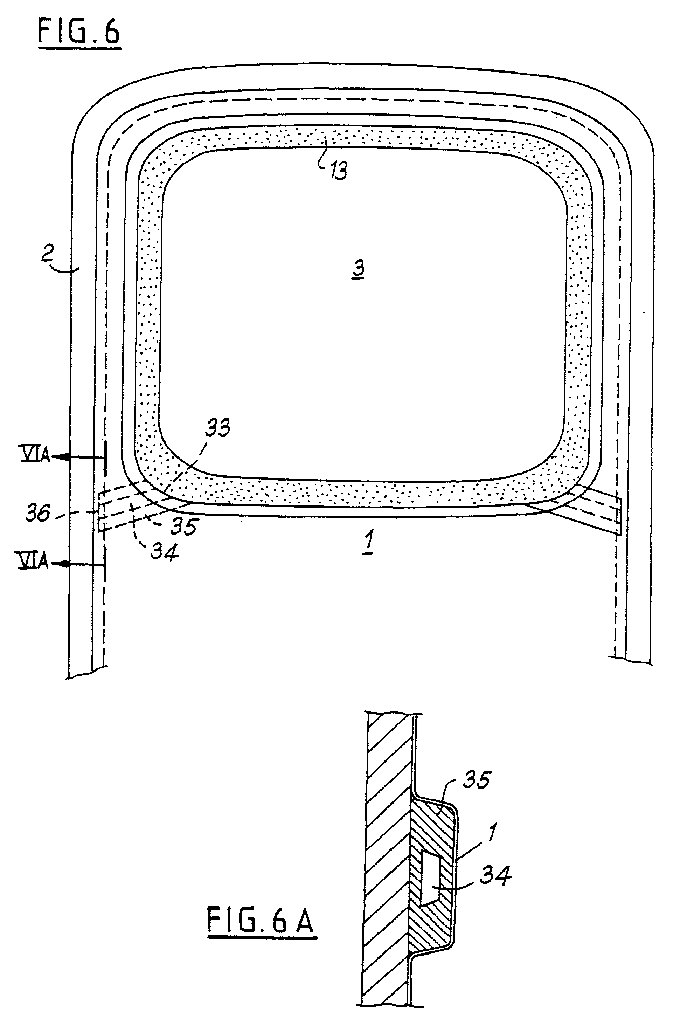

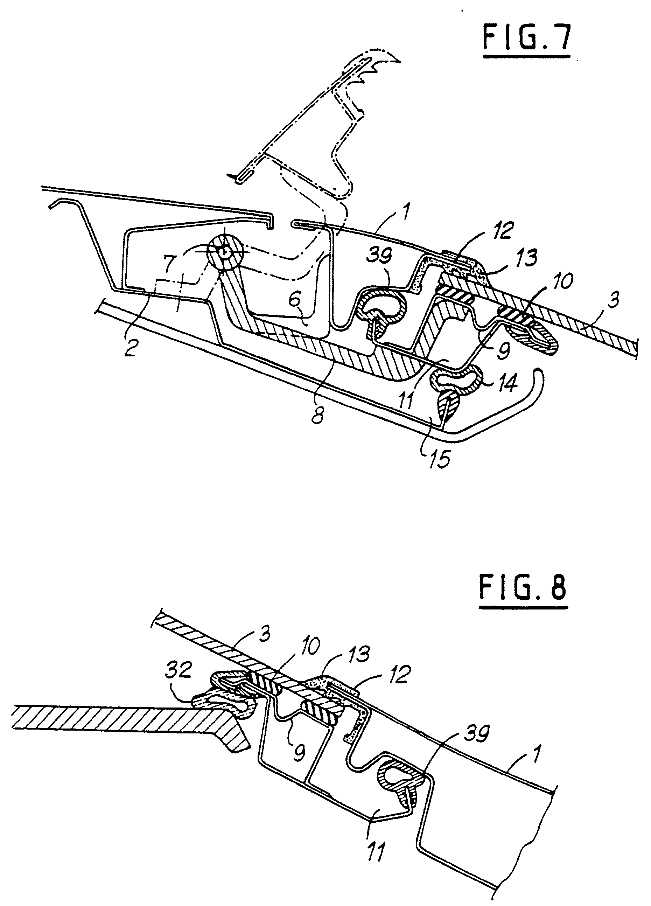

En ce qui concerne la variante de réalisation représentée sur les figures 7 et 8, les organes correspondants sont désignés par les mêmes repères. L'avantage de cette forme de réalisation réside dans le fait que celle-ci assure une étanchéité parfaite entre la vitre non relevée et l'habitacle du véhicule grâce à un joint d'étanchéité 39 fixé au cadre 9 de la vitre et en appui contre le châssis 1 sur toute la périphérie de celle-ci ; on notera qu'ici le cadre 9 ne présente plus une section transversale en trapèzes isocèles successifs, mais en U dont les ailes sont repliées vers l'extérieur parallèlement à la vitre avec insertion du produit collant entre ces ailes et cette vitre. La gouttière 11 est donc constituée par une pièce distincte, et l'évacuation de l'eau est obtenue de la même manière que cela a déjà été décrit en référence aux figures 6 et 6A. Les verrous 4 peuvent être identiques à ceux de la version précédente.

En résumé, l'invention qui vient d'être exposée montre un dispositif permettant d'associer ou de dissocier une vitre plane ou bombée à un ensemble mobile d'un véhicule, tel qu'une porte ou un hayon pour permettre, soit l'ouverture simultanée de cet ensemble et de la vitre, soit l'ouverture dudit ensemble sans la vitre. Dans le cas d'un véhicule avec hayon arrière, le relevage du hayon avec sa vitre donne un accès total au coffre arrière et à l'habitacle du véhicule ; en revanche, le relevage du hayon, la vitre restant en place, donne un accès seulement au coffre du véhicule et isole l'habitacle de l'extérieur.

Les verrous 4 et la commande de verrou 5 permettent de choisir l'option d'ouverture (avec ou sans vitre), tandis que la serrure 38 habituelle permet l'ouverture après le choix de l'option.

Bien entendu, l'invention n'est pas limitée aux formes de réalisation ci-dessus décrites et représentées, et on pourra prévoir d'autres formes de réalisation sans pour cela sortir du cadre de l'invention ; en particulier, les verrous et commande de verrou peuvent être non seulement mécaniques, mais également électriques, électromagnétiques, pneumatiques, oléopneumatiques, etc., et la commande de verrou peut tout aussi bien se trouver à l'intérieur du véhicule qu'à l'extérieur de celui-ci en fonction de la nature du verrou.

**Description pour les Etats contractants suivants : AT, BE, CH, LI, LU, NL, SE**

L'invention concerne les véhicules, notamment les véhicules automobiles, et plus précisément une porte de véhicule comportant un châssis de porte pivotant par rapport à l'habitacle et une vitre, adaptée à autoriser un mouvement relatif pivotant entre la vitre et le châssis (voir US-A-4413854).

A l'heure actuelle, les véhicules automobiles du type « à deux corps » connaissent une faveur croissante de la part du public. Ces véhicules, comportant une porte arrière connue sous le nom de hayon, articulée autour d'un axe horizontal en haut de la partie arrière du véhicule, ont en effet pour avantage d'allouer, si nécessaire, un important volume de chargement simplement en enlevant ou en repliant la tablette arrière. Couramment, les véhicules de ce type sont également munis d'une banquette arrière repliable derrière la banquette avant, ou même entièrement amovible, ce qui augmente encore le volume disponible.

Ces véhicules ont malheureusement un inconvénient important : l'accès au coffre impliquant le pivotement de la totalité du hayon, provoque la mise en contact de l'habitacle avec l'air extérieur ; lorsque la température est très froide ou au contraire très chaude, les occupants de l'habitacle subissent donc de brusques et désagréables variations de température et sont également soumis éventuellement au vent et autres intempéries, ce qui n'est pas le cas des occupants des véhicules classiques connus sous le nom de « trois corps ».

L'invention a pour but de remédier à cet inconvénient et concerne à cet effet une porte de véhicule comportant un châssis pivotant par rapport à l'habitacle et une vitre adaptée à autoriser un mouvement relatif pivotant entre la vitre et le châssis, caractérisée en ce que la vitre est elle-même montée pivotante par rapport à l'habitacle, les axes géométriques de pivotement du châssis de la porte et de pivotement de la vitre sont confondus, et il est prévu au moins un verrou de solidarisation et désolidarisation de la vitre et du châssis et une commande de verrou, de telle sorte qu'en solidarisation le châssis de porte et la vitre soient manoeuvrables ensemble, et qu'en désolidarisation ils soient manoeuvrables séparément.

Grâce à cette conception, il est offert à l'utilisateur une possibilité de mouvement relatif pivotant entre la vitre et le châssis permettant un accès au coffre par pivotement du châssis de porte seul, la vitre restant en place entre le toit du véhicule et la tablette arrière de manière à maintenir l'habitacle pratiquement clos.

L'invention sera mieux comprise grâce à la description qui va suivre se rapportant à des formes de réalisation préférentielles données à titre d'exemples non limitatifs et aux dessins ci-joints dans lesquels :

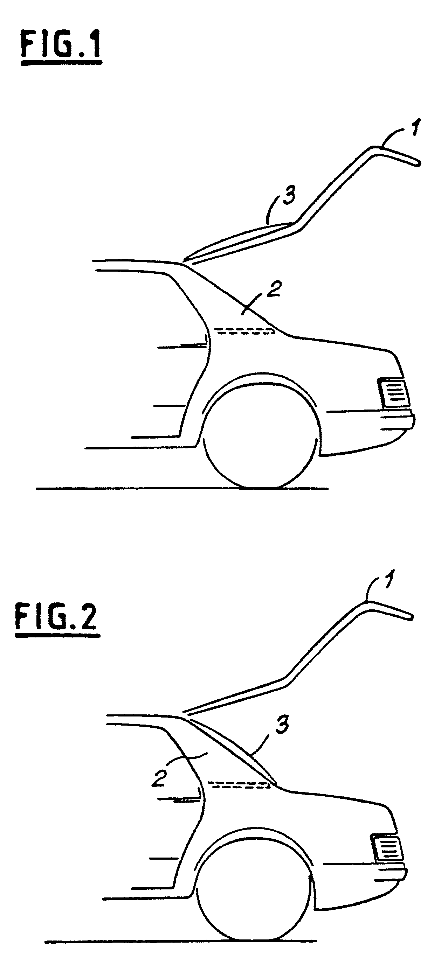

les figures 1 et 2 montrent schématiquement un véhicule vu du profil muni respectivement d'une porte selon l'invention en position ouverte et de la même porte dont seul le châssis est dans cette position ouverte ;

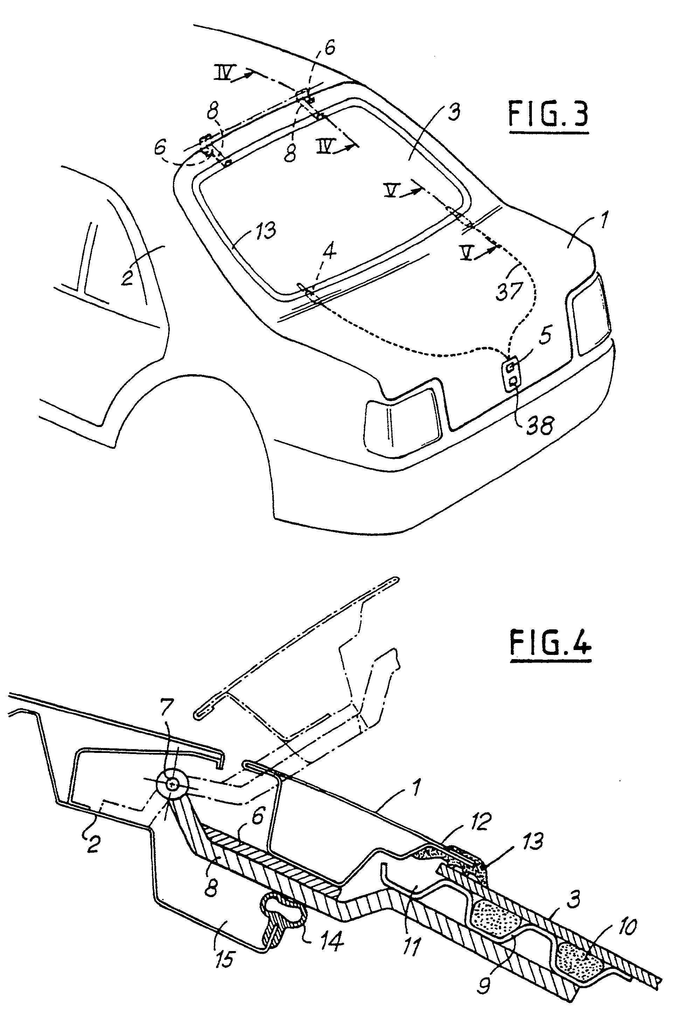

la figure 3 montre schématiquement en perspective l'arrière d'un véhicule muni de cette même porte ;

la figure 4 est une section schématique selon la ligne IV-IV de la figure 3 montrant le montage de la porte dans la région des articulations ;

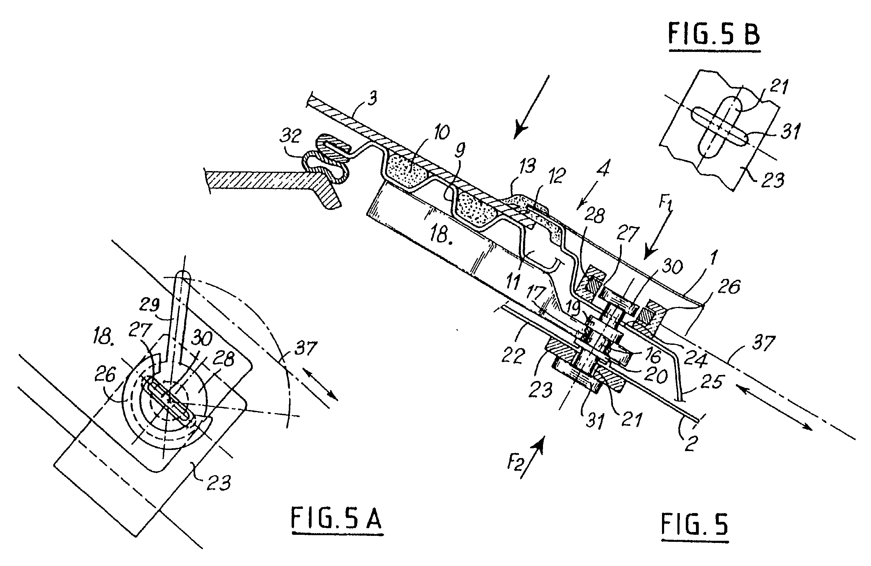

la figure 5 est une section schématique melon la ligne V-V de la figure 3 montrant le détail de la porte dans la région des verrous ;

la figure 5A est une vue des organes du verrou suivant la flèche F$_1$ de la figure 5, la porte proprement dite n'étant pas représentée ;

la figure 5B est une vue suivant la flèche F$_2$ de la figure 5 ;

la figure 6 est une vue schématique arrière d'une porte selon l'invention ;

la figure 6A est une section partielle selon la ligne VIA-VIA de la figure 6 ;

la figure 7 est une section schématique d'une variante de réalisation du montage de la porte dans la région des articulations ;

la figure 8 est une section schématique de la même variante de réalisation de la porte dans la région d'un verrou, celui-ci n'étant pas représenté.

De manière générale, les dessins montrent une porte de véhicule, du type hayon arrière, comportant un châssis 1 pivotant par rapport à l'habitacle 2 et une vitre 3, adaptée à autoriser un mouvement relatif pivotant entre la vitre 3 et le châssis 1.

A cet effet, la vitre 3 est elle-même montée pivotante par rapport à l'habitacle 2, et les axes géométriques de pivotement du châssis 1 de la porte et de pivotement de la vitre 3 sont confondus ; de plus, il est prévu au moins un, et de préférence deux, verrous 4 de solidarisation et désolidarisation de la vitre 3 et du châssis 1 ainsi qu'une commande 5 de verrou, de telle sorte qu'en solidarisation le châssis de la porte et la vitre soient manoeuvrables ensemble et qu'en désolidarisation ils soient manoeuvrables séparément.

Le châssis 1 de la porte est articulé à l'habitacle 2 au moyen de deux dispositifs formant charnières constitués d'un bras pivotant 6 fixé au châssis de porte et monté à rotation autour d'un axe 7, lui-même fixé à la partie arrière supérieure du pavillon de l'habitacle.

De même, la vitre est articulée à l'habitacle au moyen d'une charnière munie d'un bras 8 pivotant autour du même axe 7 ; ce bras pivotant 8 est fixé à un cadre 9 entourant la vitre 3 et constitué d'un profilé dont la section transversale présente une succession de plusieurs trapèzes isocèles dont les bases constituant une face du cadre sont placées contre cette vitre 3, et dont les bases constituant la face opposée sont fixées au bras 8 de la charnière, par exemple par des soudures. La solidarisation du cadre 9 et de la vitre 3 est obtenue par collage, le produit de collage 10 emplissant au moins l'un des trapèzes isocèles, ouvert du côté de la vitre 3. Le profilé est disposé de telle sorte que le trapèze le plus extérieur par rapport au contour de la vitre 3 soit ouvert du côté de la vitre et légèrement en débordement par rapport à ce contour de manière à constituer une gouttière 11.

Le châssis 1 de la porte comporte une partie 12 disposée vis-à-vis de la vitre 3 au-dessous d'elle ; à cette partie 12 du châssis 1, est fixé un joint d'étanchéité 13 en contact avec la vitre 1 lorsque la porte est en position fermée et également lorsqu'elle est en position ouverte quand le châssis et la vitre sont solidarisés.

De même, une tôle de l'habitacle placée sous le châssis 1 porte un joint 14 assurant l'étanchéité entre l'habitacle et ce châssis 1 tout le long de celui-ci, sauf dans la région des bras 8 où le joint 14 est en contact avec ceux-ci au lieu de l'être avec ledit châssis. A proximité de ce joint 14, la tôle constituant l'habitacle est repliée de manière à constituer une gouttière 15.

De préférence, le châssis 1 et la glace 3 sont articulés à l'habitacle chacun au moyen de deux charnières, les axes 7 pouvant être constitués par une tige unique ou encore par des tiges distinctes disposées dans le prolongement l'une de l'autre.

Bien qu'un seul verrou de solidarisation soit nécessaire, il est préférable que ceux-ci soient au nombre de deux.

Chacun des verrous 4 comporte un pion 16 monté pivotant dans un perçage 17 d'une patte 18 soudée sous le cadre 9 de la vitre 3, de préférence mais pas obligatoirement du côté de la vitre 3 qui est opposé au côté dans la région duquel cette vitre est articulée au pavillon de l'habitacle du véhicule. Le pion 16 est immobilisé longitudinalement par rapport à la patte 18 au moyen par exemple d'une collerette 19 prévue sur ce pion d'un côté de la patte et d'une rondelle 20 fixée de l'autre côté.

Le pion 16 traverse également, sous la patte 18, une ouverture 21 usinée dans une partie fixe, par exemple une tôle 22 de la carrosserie et/ou une pièce rapportée 23 fixée sur celle-ci.

De l'autre côté de la patte 18, le pion 16 traverse également une ouverture 24 réalisée dans une tôle 25 du châssis 1 et un collier 26 fixé à cette tôle 25, ainsi qu'une ouverture 27 d'une bague 28 immobilisée en translation mais mobile en rotation dans le collier 26 fixé à la tôle 25 ; ce collier 26 est ouvert le long d'un arc ayant un angle au centre un peu supérieur à 90° de manière à permettre un libre débattement sur 90° d'un doigt 29 s'étendant dans une direction radiale par rapport à la bague 28 et faisant ici partie intégrante de celle-ci, dont le rôle sera exposé plus loin.

L'ouverture 27 de la bague 28 est de forme oblongue et reçoit une aiguille 30 s'étendant transversalement au pion 16 à l'extrémité supérieure de celui-ci et de plus grande longueur que le diamètre de cette extrémité, cette aiguille 30 pouvant être une pièce séparée goupillée dans le pion 16 ou encore faire partie intégrante de ce pion. Grâce à la coopération de l'ouverture oblongue 27 et de l'aiguille 30, le pion 16 est solidaire en rotation de la bague 28 et de son doigt 29.

L'ouverture 24 de la tôle 25 et du collier 26 est également de forme oblongue, légèrement plus grande que l'aiguille 30, et disposée juste en-dessous de cette dernière lorsque le doigt 29 occupe l'une de ses positions extrêmes.

L'ouverture 21 de la pièce rapportée 23 est elle aussi oblongue, et l'extrémité du pion 16 opposée à l'aiguille 30 comporte une aiguille 31 pouvant être également une pièce goupillée dans le pion ou faire partie intégrante de celui-ci ; les dimensions de l'aiguille 31 sont légèrement inférieures à celles de l'ouverture oblongue 21 ; l'orientation de l'aiguille 31 par rapport au grand axe de l'ouverture oblongue 21 est telle que, dans l'autre position extrême du doigt 29, l'aiguille 31 soit juste en face de l'ouverture 21, en-dessous de celle-ci ; en conséquence, dans la première position extrême, l'aiguille 31 et le grand axe de l'ouverture 21 sont sensiblement orthogonaux.

Il en résulte que dans la première position, le châssis 1 peut être dégagé du pion 16, tandis que celui-ci, immobilisé par rapport à la tôle 22, retient à celle-ci la vitre 3 ; en revanche, dans la deuxième position, le pion 16 est solidaire en translation du châssis 1 et, étant dégagé de la tôle 22, est libre d'entraîner dans son mouvement la patte 18 et la vitre 3.

Un joint 32 fixé au cadre 9 appuie, lorsque la glace 3 est en position fermée, contre la tablette arrière du véhicule, et assure l'étanchéité de l'habitacle tout le long de la glace sensiblement au niveau de la partie inférieure de celle-ci.

Comme on l'a vu, le cadre 9 de la vitre 3 est muni sur toute sa périphérie d'une gouttière 11, et l'habitacle comporte lui-même une gouttière 15. Afin de permettre l'évacuation de l'eau de la gouttière 11, celle-ci est munie à sa partie inférieure de deux orifices latéraux 33 débouchant chacun dans un conduit 34 d'un bloc 35 fixé au cadre 9 et possédant eux-mêmes une ouverture 36 débouchant dans la gouttière 15.

Ce sont les extrémités libres des doigts 29 des verrous 4 qui sont reliées à la commande de verrou 5 au moyen d'une tringlerie pouvant être rigide ou comporter des câbles souples 37.

Ainsi, deux verrouillages sont possibles pour la vitre :

— un verrouillage sur le châssis 1 permettant de relever celui-ci avec la vitre 3,

— un verrouillage sur l'habitacle 2 du véhicule permettant de relever le châssis de hayon seul.

Pour relever le châssis avec sa vitre, on commence donc par actionner la commande de verrou 5 pour choisir l'option désirée, ici avec vitre, si cette commande de verrou n'est pas dans la position appropriée. Puis, on déverrouille la porte en agissant sur la serrure générale 38 classique. L'action sur la commande de verrou 5 provoque, par l'intermédiaire de la tringlerie 37, le pivotement du doigt 29 dans la bague 28 ; le doigt 29 entraîne donc la rotation de l'ouverture oblongue 27 et en conséquence celle de l'aiguille 30 ; il en résulte que cette dernière vient se placer perpendiculairement à l'ouverture 24 et que l'aiguille 31 se place en regard de l'ouverture 21. De la sorte, le châssis 1 et la vitre 3 sont solidarisés l'un à l'autre et libérés par rapport à l'habitacle. Le fait de faire pivoter le châssis 1 autour de l'axe 7 entraîne donc également le pivotement de la glace 3 autour du même axe.

Pour relever le châssis sans la vitre, on commence donc par actionner la commande de verrou 5 pour choisir l'option désirée, ici sans vitre, si cette commande de verrou n'est pas dans la position appropriée. L'action sur la commande de verrou 5 fait pivoter le doigt 29 dans le collier 26, ce qui entraîne l'aiguille 30 en face de l'ouverture oblongue 24 du collier, et bloque l'aiguille 31 contre la pièce 23 ; il en résulte que la patte 18 est immobilisée par rapport à l'habitacle et que le châssis 1 est désolidarisé du pion 16. Le fait de faire pivoter le châssis 1 autour de l'axe 7 n'entraîne donc aucun mouvement de la vitre 3.

En ce qui concerne la variante de réalisation représentée sur les figures 7 et 8, les organes correspondants sont désignés par les mêmes repères. L'avantage de cette forme de réalisation réside dans le fait que celle-ci assure une étanchéité parfaite entre la vitre non relevée et l'habitacle du véhicule grâce à un joint d'étanchéité 39 fixé au cadre 9 de la vitre et en appui contre le châssis 1 sur toute la périphérie de celle-ci ; on notera qu'ici le cadre 9 ne présente plus une section transversale en trapèzes isocèles successifs, mais en U dont les ailes sont repliées vers l'extérieur parallèlement à la vitre avec insertion du produit collant entre ces ailes et cette vitre. La gouttière 11 est donc constituée par une pièce distincte, et l'évacuation de l'eau est obtenue de la même manière que cela a déjà été décrit en référence aux figures 6 et 6A. Les verrous 4 peuvent être identiques à ceux de la version précédente.

En résumé, l'invention qui vient d'être exposée montre un dispositif permettant d'associer ou de dissocier une vitre plane ou bombée à un ensemble mobile d'un véhicule, tel qu'une porte ou un hayon pour permettre, soit l'ouverture simultanée de cet ensemble et de la vitre, soit l'ouverture dudit ensemble sans la vitre. Dans le cas d'un véhicule avec hayon arrière, le relevage du hayon avec sa vitre donne un accès total au coffre arrière et à l'habitacle du véhicule ; en revanche, le relevage du hayon, la vitre restant en place, donne un accès seulement au coffre du véhicule et isole l'habitacle de l'extérieur.

Les verrous 4 et la commande de verrou 5 permettent de choisir l'option d'ouverture (avec ou sans vitre), tandis que la serrure 38 habituelle permet l'ouverture après le choix de l'option.

Bien entendu, l'invention n'est pas limitée aux formes de réalisation ci-dessus décrites et représentées, et on pourra prévoir d'autres formes de réalisation sans pour cela sortir du cadre de l'invention ; en particulier, les verrous et commande de verrou peuvent être non seulement mécaniques, mais également électriques, électromagnétiques, pneumatiques, oléopneumatiques, etc., et la commande de verrou peut tout aussi bien se trouver à l'intérieur du véhicule qu'à l'extérieur de celui-ci en fonction de la nature du verrou.

## Revendications

### Revendications pour les Etats contractants suivants : DE, GB, IT

1. Porte de véhicule, comportant un châssis (1) pivotant par rapport à l'habitacle (2) et une vitre (3) fixée à l'intérieur d'un cadre (9) monté lui-même pivotant par rapport à l'habitacle (2), les axes géométriques de pivotement du châssis (1) de la porte d'une part, et du cadre (9) et de la vitre (3) d'autre part, étant à la partie supérieure de l'habitacle et confondus, porte caractérisée en ce qu'elle comporte au moins un verrou (4) actionnable dans une position de solidarisation du cadre (9) avec sa vitre (3) par rapport au châssis (1) de porte et de désolidarisation du cadre avec sa vitre par rapport à l'habitacle (2) dans laquelle le cadre avec sa vitre et le châssis de porte sont pivotables solidairement, et dans une position de désolidarisation du cadre (9) avec sa vitre (3) par rapport au châssis (1) de porte et de solidarisation du cadre avec sa vitre par rapport à l'habitacle dans laquelle le châssis de porte est pivotable seul, une commande (5) de position de verrou(s) commune à tous les verrous (4) pour sélectionner la position de ceux-ci, et une unique serrure (38) de porte, de telle sorte qu'en fonction de la position sélectionnée par la commande (5) de verrous, la manoeuvre de la serrure (38) permette sélectivement le relevage du châssis (1) de porte et de la vitre (3) avec son cadre (9), et le relevage du châssis de porte sans la vitre et son cadre lesquels sont alors solidarisés à l'habitacle (2).

2. Porte selon la revendication 1, caractérisée en ce que le châssis (1) de la porte est articulé à l'habitacle (2) au moyen d'un bras pivotant (6) fixé audit châssis.

3. Porte selon l'une quelconque des revendications 1 et 2, caractérisée en ce que la vitre (3) est fixée à l'intérieur d'un cadre (9) et articulée à l'habitacle (2) au moyen d'un bras pivotant (8) fixé audit cadre.

4. Porte selon l'une quelconque des revendications 1 a 3, caractérisée en ce qu'elle comporte un joint d'étanchéité (13) entre le châssis (1) et la vitre (3).

5. Porte selon l'une quelconque des revendications 1 a 4, caractérisée en ce qu'elle comporte un joint d'étanchéité (14) entre l'habitacle (2) et au moins une partie du châssis (1).

6. Porte selon l'une quelconque des revendications 1 a 5, caractérisée en ce qu'elle comporte un joint d'étanchéité (39) entre l'habitacle (2) et au moins une partie d'un cadre (9) à l'intérieur duquel la vitre (3) est fixée.

7. Porte selon l'une quelconque des revendications 1 à 6, caractérisée en ce qu'elle comporte un joint d'étanchéité (32) entre le châssis (1) et un cadre (9) à l'intérieur duquel la vitre (3) est fixée.

8. Porte selon l'une quelconque des revendications 1 à 7, caractérisée en ce que la commande de verrou (5) et le verrou (4) coopèrent au moyen d'une tringlerie (37).

9. Porte selon l'une quelconque des revendications 1 à 8, caractérisée en ce que le verrou (4) comporte un pion (16) immobilisé en translation, mais mobile en rotation, dans une patte (18) solidaire de la vitre (3), et traversant des ouvertures oblongues (21, 24) réalisées respectivement dans une pièce (23) solidaire de l'habitacle (2) et dans une pièce (26) solidaire du châssis (1), en ce que ce pion (16) comporte des aiguilles transversales (31, 30) logeables chacune dans l'une de ces ouvertures oblongues et orientées angulairement de sorte a ne jamais être simultanément en face de leur ouverture respective, et en ce que ledit pion (16) est relié mécaniquement à la commande de verrou (5) pour pouvoir être actionné en rotation par ladite commande de verrou.

10. Porte selon l'une quelconque des revendications 1 à 9, caractérisée en ce que le verrou (4) comporte un collier (26) fendu dans lequel est insérée une bague (28) mobile en rotation et munie d'un doigt (29) relié à la commande de verrou (5) par un câble (37), ladite bague (28) comportant une ouverture oblongue (27) dans laquelle est logée une aiguille transversale d'un pion (16) mobile en rotation.

## Revendications pour les Etats contractants suivants : AT, BE, CH, LI, LU, NL, SE

1. Porte de véhicule, comportant un châssis (1) pivotant par rapport à l'habitacle (2) et une vitre (3), adaptée à autoriser un mouvement relatif pivotant entre la vitre et le châssis, caractérisée en ce que la vitre (3) est elle-même montée pivotante par rapport à l'habitacle (2), les axes géometriques de pivotement du châssis (1) de la porte et de pivotement de la vitre (3) sont confondus, et il est prévu au moins un verrou (4) de solidarisation et désolidarisation de la vitre et du châssis et une commande de verrou (5), de telle sorte qu'en solidarisation le châssis de porte et la vitre soient manoeuvrables ensemble et qu'en désolidarisation ils soient manoeuvrables séparément.

2. Porte selon la revendication 1, caracterisé en ce que le châssis (1) de la porte est articulé à l'habitacle (2) au moyen d'un bras pivotant (6) fixé audit châssis.

3. Porte selon l'une quelconque des revendications 1 et 2, caractérisé en ce que la vitre (3) est fixée à l'intérieur d'un cadre (9) et articulée à l'habitacle(2) au moyen d'un bras pivotant (8) fixé audit cadre.

4. Porte selon l'une quelconque des revendications 1 à 3, caractérisé en ce qu'elle comporte un joint d'étanchéité (13) entre le châssis (1) et la vitre (3).

5. Porte selon l'une quelconque des revendications 1 à 4, caractérisé en ce qu'elle comporte un joint d'étanchéité (14) à entre l'habitacle (2) et au moins une partie du châssis (1).

6. Porte selon l'une quelconque des revendications 1 à 5, caractérisé en ce qu'elle comporte un joint d'étanchéité (39) entre l'habitacle (2) et au moins une partie d'un cadre (9) à l'intérieur duquel la vitre (3) est fixée.

7. Porte selon l'une quelconque des revendications 1 à 6, caractérisé en ce qu'elle comporte un joint d'étanchéité (32) entre le châssis (1) et un cadre (9) à l'intérieur duquel la vitre (3) est fixée.

8. Porte selon l'une quelconque des revendications 1 à 7, caractérisée en ce que la commande de verrou (5) et le verrou (4) coopèrent au moyen d'une tringlerie (37).

9. Porte selon l'une quelconque des revendications 1 à 8, caractérisée en ce que le verrou (4) comporte un pion (16) immobilisé en translation, mais mobile en rotation, dans une patte (18) solidaire de la vitre (3), et traversant des ouvertures oblongues (21, 24) réalisées respectivement dans une pièce (23) solidaire de l'habitacle (2) et dans une pièce (26) solidaire du châssis (1), en ce que ce pion (16) comporte des aiguilles transversales (31, 30) logeables chacune dans l'une de ces ouvertures oblongues et orientées angulairement de sorte à ne jamais être simultanément en face de leur ouverture respective, et en ce que ledit pion (16) est relié mécaniquement à la commande de verrou (5) pour pouvoir être actionné en rotation par ladite commande de verrou.

10. Porte selon l'une quelconque des revendications 1 à 9, caractérisée en ce que le verrou (4) comporte un collier (26) fendu dans lequel est insérée une bague (28) mobile en rotation et munie d'un doigt (29) relié à la commande de verrou (5) par un câble (37), ladite bague (28) comportant une ouverture oblongue (27) dans laquelle est logée une aiguille tranversale d'un pion (16) mobile en rotation.

## Claims

### Claims for the following contracting States : DE, GB, IT

1. A véhicle door, comprising a frame (1), which pivots with respect to the passenger cell (2), and a window (3), which is fixed to the interior of a frame (9), which is itself mounted so as to be pivotable with respect to the passenger cell (2), the geometric axes of pivoting of the door frame (1) and of the frame (9) and the window (3) being on the upper part of the passenger cell and coinciding, said door characterised in that it comprises at least one bolt (4), which can be moved into a position in which the frame (9) and its window (3) are connected to the door frame (1) and in which the frame and its window are detached from the passenger cell (2), in which position the frame and its window and the door frame are pivotable jointly, and into a position in which the frame (9) and its window (3) are detached from the door frame (1) and the frame and its windows are connected to the passenger cell, in which position the door frame is pivotable on its own, a bolt position control (5) common to all the bolts (4) for selecting the position thereof, an a single door lock (38), such that, as a function of the position selected by the bolt control (5),

operation of the lock (38) permits selectively the raising of the door frame (1) and the window (3) with its frame (9), and the raising of the door frame without the window and its frame, the latter thus being connected to the passenger cell (2).

2. A door as claimed in claim 1, characterised in that the door frame (1) is articulated with the passenger cell (2) by means of a pivoting arm (6) fixed to said frame.

3. A door as claimed in either claim 1 or 2, characterised in that the window (3) is fixed to the inside of a frame (9) and is articulated with the passenger cell (2) by means of a pivoting arm (8) fixed to said frame.

4. A door as claimed in any of claims 1 to 3, characterised in that it comprises a seal (13) between the frame (1) and the window (3).

5. A door as claimed in any of claim 1 to 4, characterised in that it comprises a seal (14) between the passenger cell (2) and at least a part of the frame (1).

6. A door as claimed in any of claims 1 to 5, characterised in that it comprises a seal (39) between the passenger cell (2) and at least a part of the frame (9) inside which the window (3) is fixed.

7. A door as claimed in any of claims 1 to 6, characterised in that it comprises a seal (32) between the frame (1) and the frame (9), inside which the window (3) is fixed.

8. A door as claimed in any of claims 1 to 7, characterised in that the bolt control (5) and the bolt (4) cooperate by means of a linkage (37).

9. A door as claimed in any of claims 1 to 8, characterised in that the bolt (4) comprises a stud (16), which is secured against translational motion but which is rotatable in a clamp (18), which is solid with the window (3) and passes through oblong apertures (21, 24) in a part (23), which is solid with the passenger cell (2), and a part (26), which is solid with the frame (1), respectively, in that said stud (16) comprises transverse pins (31, 30), each of which can be accommodated in one of the oblong apertures and angularly directed such that they never simultaneously face their respective aperture, and in that said stud (16) is connected mechanically to the bolt control (5) so that it can be rotated by said bolt control.

10. A door as claimed in any of claims 1 to 9, characterised in that the bolt (4) comprises a split collar (26), in which a rotatable ring (28) is inserted which is provided with a finger (29), which is connected to the bolt control (5) by a cable (37), said ring (28) comprising an oblong aperture (27), in which a transverse pin of a rotatable stud (16) is accommodated.

**Claims for the following contracting States :
AT, BE, CH, LI, LU, NL, SE**

1. A vehicle door, comprising a frame (1) which pivots with respect to the passenger cell (2), and a window (3), which is adapted to allow a relative pivoting movement between the window and the frame, characterised in that the window (3) is itself mounted so as to be pivotable with respect to the passenger cell (2), the geometric axes of pivoting of the door frame (1) and the window (3) coincide, and at least one bolt (4) for interlocking and disconnecting the window and the frame, and a bolt control (5) are provided such that, when they are interlocked, the door frame and the window are manoeuvreable together and, when they are disconnected, they can be manoeuvred separately.

2. A door as claimed in claim 1, characterised in that the door frame (1) is articulated with the passenger cell (2) by means of a pivoting arm (6) fixed to said frame.

3. A door as claimed in either claim 1 or 2, characterised in that the window (3) is fixed to the inside of a framework (9) and is articulated with the passenger cell (2) by means of a pivoting arm (8) fixed to said framework.

4. A door as claimed in any of claims 1 to 3, characterised in that it comprises a seal (13) between the frame (1) and the window (3).

5. A door as claimed in any of claims 1 to 4, characterised in that it comprises a seal (14) between the passenger cell (2) and at least a part of the frame (1).

6. A door as claimed in any of claims 1 to 5, characterised in that it comprises a seal (39) between the passenger cell (2) and at least a part of the framework (9), inside which the window (3) is fixed.

7. A door as claimed in any of claims 1 to 6, characterised in that it comprises a seal (32) between the frame (1) and the framework (9), inside which the window (3) is fixed.

8. A door as claimed in any of claims 1 to 7, characterised in that the bolt control (5) and the bolt (4) cooperate by means of a linkage (37).

9. A door as claimed in any of claims 1 to 8, characterised in that the bolt (4) comprises a stud (16), which is secured against translational motion but which is rotatable, in a clamp (18), which is solid with the window (3) and crosses oblong apertures (21, 24) in a part (23), which is solid with the passenger cell (2), and a part (26), which is solid with the frame (1), respectively, in that said stud (16) comprises transverse pins (31, 30), each of which can be accommodated in one of the oblong apertures and angularly directed such that they never simultaneously face their respective aperture, and in that said stud (16) is connected mechanically to the bolt control (5) so that it can be rotated by said bolt control.

10. A door as claimed in any of claims 1 to 9, characterised in that the bolt (4) comprises a split collar (26), in which a rotatable ring (28) is inserted which is provided with a finger (29), which is connected to the bolt control (5) by a cable (37), said ring (28) comprising an oblong aperture (27), in which a transverse pin of a rotatable stud (16) is accommodated.

## Patentansprüche

### Patentansprüche für folgende Vertragsstaaten : DE, GB, IT

1. Kraftfahrzeugtür, bestehend aus einem relativ zum Karosseriegehäuse (2) kippbaren Chassis (1) und einer in einem Rahmen (9), der seinerseits relativ zum Karosseriegehäuse (2) kippbar angebracht ist, befestigten Scheibe (3), wobei die geometrischen Achsen, um die das Chassis (1) der Tür einerseits und der Rahmen (9) mit der Scheibe (3) andererseits kippbar sind, am oberen Teil des Karosseriegehäuses angeordnet sind und zusammenfallen. Tür, dadurch gekennzeichnet, daß sie mindestens einen Riegel (4) aufweist, der in eine Stellung gebracht werden kann, in der der Rahmen (9) mit seiner Scheibe (3) mit dem Chassis (1) der Tür verbunden ist und der Rahmen mit seiner Scheibe vom Karosseriegehäuse (2) gelöst ist und in der der Rahmen mit seiner Scheibe und das Chassis der Tür Als Einheit kippbar sind, und in eine Stellung, in der der Rahmen (9) mit seiner Scheibe (3) vom Chassis (1) der Tür gelöst und der Rahmen mit seiner Scheibe mit dem Karosseriegehäuse verbunden ist und in der das Chassis der Tür einzeln kippbar ist, einem allen Riegeln (4) gemeinsamen Riegeleinstellorgan (5) zur Wahl ihrer Stellung und einem einzigen Türschloß (38), so daß die Betätigung des Schlosses (38) je nach mittels des Riegeleinstellorgans (5) ausgewählter Stellung erlaubt, das Chassis (1) der Tür und der Scheibe (3) mit ihrem Rahmen (9) oder das Chassis der Tür ohne die Scheibe und ihren Rahmen zu heben, die dann mit dem Karosseriegehäuse (2) verbunden sind.

2. Tür gemäß Patentanspruch 1, dadurch gekennzeichnet, daß das Chassis (1) der Tür mittels eines kippbaren, am genannten Chassis befestigten Armes (6) am Karosseriegehäuse (2) angeordnet ist.

3. Tür gemäß irgendeinem der Patentansprüche 1 und 2, dadurch gekennzeichnet, daß die Scheibe (3) in einem Rahmen (9) befestigt und mittels eines kippbaren, am genannten Rahmen befestigen Armes (8) am Karosseriegehäuse (2) angelenkt ist.

4. Tür gemäß irgendeinem der Patentansprüche 1 bis 3, dadurch gekennzeichnet, daß sie zwischen dem Chassis (1) und der Scheibe (3) eine Dichtung (13) aufweist.

5. Tür gemäß irgendeinem der Patentansprüche 1 bis 4, dadurch gekennzeichnet, daß sie zwischen dem Karosseriegehäuse (2) und mindestens einem Teil des Chassis (1) eine Dichtung (14) aufweist.

6. Tür gemäß irgendeinem der Patentansprüche 1 bis 5, dadurch gekennzeichnet, daß sie zwischen dem Karosseriegehäuse (2) und mindestens einem Teil eines Rahmens (9) in dem die Scheibe (3) befestigt ist, eine Dichtung (39) aufweist.

7. Tür gemäß irgendeinem der Patentansprüche 1 bis 6, dadurch gekennzeichnet, daß sie zwischen dem Chassis (1) und einem Rahmen (9), in dem die Scheibe (3) befestigt ist, eine Dichtung (32) aufweist.

8. Tür gemäß irgendeinem der Patentansprüche 1 bis 7, dadurch gekennzeichnet, daß das Riegeleinstellorgan (5) und der Riegel (4) mittels eines Gestänges (37) zusammenarbeiten.

9. Tür gemäß irgendeinem der Patentansprüche 1 bis 8, dadurch gekennzeichnet, daß der Riegel (4) ein in einer mit der Scheibe (3) verbundenen lasche (18) gegen Verschiebungen befestigtes, aber drehbares Metallstück (16) aufweist, das längliche Öffnungen (21, 24) durchquert die sich in einem mit dem Karosseriegehäuse (2) verbundenen Teil (23) bzw. in einem mit dem Chassis (1) verbundenen Teil (26) befinden, dadurch, daß dieses Metallstück (16) quer verlaufende Nadeln (31, 30) trägt, die sich jeweils in eine dieser länglichen Öffnungen einfügen können und derart in einem Winkel zueinander gerichtet sind, daß sie sich nie gleichzeitig ihren entsprechenden Öffnungen gegenüber befinden, und dadurch, daß das genannte Metallstück (16) mit dem Riegeleinstellorgan (5) mechanisch verbunden ist, um durch das genannte Riegeleinstellorgan gedreht zu werden.

10. Tür gemäß irgendeinem der Patentansprüche 1 bis 9, dadurch gekennzeichnet, daß der Riegel (4) einen ausgeschnittenen Ring (26) trägt, in den ein drehbarer Ring (28) eingefügt ist, der einen durch ein Drahtseil (37) mit dem Riegeleinstellorgan (5) verbundenen Zapfen (29) trägt, wobei der genannte Ring (28) eine längliche Öffnung (27) aufweist, in die eine quer verlaufende Nadel eines drehbaren Metallstückes (16) eingefügt ist.

### Patentansprüche für folgende Vertragsstaaten : AT, BE, CH, LI, LU, NL, SE

1. Fahrzeugtür mit einem gegenüber der Karosserie (2) schwenkbaren Rahmen (1) und einer Fensterscheibe (3), eingerichtet zur Ermöglichung einer relativen Schwenkbewegung zwischen der Scheibe und dem Rahmen, dadurch gekennzeichnet, dass die Scheibe (3) selbst relativ zur Karosserie (2) schwenkbar befestigt ist, wobei die geometrischen Schwenkachsen des Türrahmens (1) und der Scheibe (3) zusammenfallen, und dass mindestens ein Riegel (4) zur festen Verbindung und lösung der Scheibe und des Rahmens und eine Riegelbetätigungseinrichtung (5) derart vorgesehen sind, dass bei fester Verbindung des Türrahmens und der Scheibe diese gemeinsam und bei Lösung getrennt betätigt sind.

2. Tür nach Anspruch 1, dadurch gekennzeichnet dass der Türrahmen (1) an der Karosserie (2) mittels eines am genannten Rahmen befestigten Schwenkarmes (6) angelenkt ist.

3. Tür nach einem der Ansprüche 1 und 2, dadurch gekennzeichnet, dass die Scheibe (3) im Inneren einer Einfassung (9) befestigt und mittels eines an dieser Einfassung befestigten Schwenkarmes (8) an der Karosserie (2) angelenkt ist.

4. Tür nach einem der Ansprüche 1 bis 3, dadurch gekennzeichnet, dass sie zwischen dem Rahmen (1) und der Scheibe (3) eine Dichtung (13) aufweist.

5. Tür nach einem der Ansprüche 1 bis 4, dadurch gekennzeichnet, dass sie zwischen der Karosserie (2) und mindestens einem Teil des Rahmens (1) eine Dichtung (14) aufweist.

6. Tür nach einem der Ansprüche 1 bis 5, dadurch gekennzeichnet, dass sie zwischen der Karosserie (2) und mindestens einem Teil eines Rahmens (9), in dessen Innerem die Scheibe (3) befestigt ist, eine Dichtung (39) aufweist.

7. Tür nach einem der Ansprüche 1 bis 6, dadurch gekennzeichnet, dass sie zwischen dem Rahmen (1) und mindestens einem Teil einer Einfassung (9), in deren Innerem die Scheibe (3) befestigt ist, eine Dichtung (39) aufweist.

8. Tür nach einem der Ansprüche 1 bis 7, dadurch gekennzeichnet, dass die Riegelbetätigungseinrichtung (5) und der Riegel (4) über ein Gestänge (37) zusammenarbeiten.

9. Tür nach einem der Ansprüche 1 bis 8, dadurch gekennzeichnet, dass der Riegel (4) einen Zapfen (16) aufweist, der unverschieblich, jedoch in einer mit der Scheibe (3) fest verbundenen lasche (18) drehbeweglich ist und längliche Öffnungen (21, 24) durchquert, die in einem mit der Karosserie (2) fest verbundenen Teil (23) bzw. in einem mit dem Rahmen (1) fest verbundenen Teil (26) vorgesehen sind, und dass der Zapfen (16) quergerichtete Flügel (31, 30) aufweist, von denen jeder in einer dieser länglichen Öffnungen aufnehmbar ist und die so im Winkel ausgerichtet sind, dass sie sich niemals gleichzeitig gegenüber ihrer jeweiligen Öffnung befinden, und dass der Zapfen (16) mechanisch mit der Riegelbätigungseinrichtung (5) verbunden ist, um durch diese Riegelbetätigungseinrichtung in Drehung versetzt werden zu können.

10. Tür nach einem der Ansprüche 1 bis 9, dadurch gekennzeichnet, dass der Riegel (4) einen geschlitzten Kragen (26) aufweist, in den ein drehbeweglicher Ring (28) eingelegt ist, der mit einem mit der Riegelbetätigungseinrichtung (5) durch ein Seil (37) verbundenen Finger (29) versehen ist, wobei der Ring (28) eine längliche Öffnung (27) aufweist, in der ein quergerichteter Flügel eines drehbeweglichen Zapfens (16) aufgenommen ist.

# FIG.1

# FIG.2

FIG.3

FIG.4

FIG.5 B

FIG.5 A

FIG.5

EP 0 200 649 B2

FIG.6

FIG.6A

_FIG.7_

_FIG. 8_